# EUROPEAN PATENT SPECIFICATION

(11) **EP 4 401 287 B1**
(45) Date of publication and mention of the grant of the patent: **16.09.2026**
(21) Application number: 22886650.5
(22) Date of filing: 07.10.2022
(51) Int. Cl.: F04B 39/00, F04B 39/02, F04B 39/12, F04C 18/02, F04C 18/356, F04C 23/00, F04C 29/00, H02K 1/04, H02K 1/18, H02K 5/04, H02K 15/02

(54) **COMPRESSOR, REFRIGERATION DEVICE, AND METHOD FOR MANUFACTURING COMPRESSOR**
VERDICHTER, KÜHLVORRICHTUNG UND VERFAHREN ZUR HERSTELLUNG EINES VERDICHTERS
COMPRESSEUR, DISPOSITIF DE RÉFRIGÉRATION ET PROCÉDÉ DE FABRICATION DE COMPRESSEUR

(30) Priority: 01.11.2021 JP 2021178547
(43) Date of publication of application: 17.07.2024
(73) Proprietor: Daikin Industries, Ltd., Osaka-shi, Osaka 530-0001 (JP)
(72) Inventor: IMAI Takahiro, Osaka-shi, Osaka 530-8323 (JP); YAMAMOTO Satoshi, Osaka-shi, Osaka 530-8323 (JP); ITO Masatoshi, Osaka-shi, Osaka 530-8323 (JP); HIRATSUKA Daisuke, Osaka-shi, Osaka 530-8323 (JP); NAKA Shojiro, Osaka-shi, Osaka 530-8323 (JP)
(74) Representative: Goddar, Heinz J.
(86) International application number: PCT/JP2022/037623
(87) International publication number: WO 2023/074320

(56) References cited:
- EP-A1- 3 065 265
- WO-A1-2015/063871
- WO-A1-2015/064199
- JP-A- 2001 289 173
- JP-A- 2001 289 173
- JP-A- 2005 057 859
- JP-A- 2006 336 070
- JP-A- 2007 113 728
- JP-A- 2015 010 258
- JP-A1- WO2017 065 256

## Description

### Technical Field

The present invention relates to a method for manufacturing a compressor.

### Background Art

JP 2001-289173 A discloses a compressor comprising a metal cylindrical body, a stator core and a resin member fixed to an outer peripheral surface of the stator core.

WO 2015/063871 A discloses a compressor having a metal cylindrical body having an oxidized film on the inner peripheral surface. The oxidized film increases the magnetic resistance of the body so that the magnetic flux entering the body is reduced.

A compressor disclosed in PTL 1 includes a resin member made of a nonconductive material and fixed between a body of a casing and a stator core of an electric motor.

### Citation List

### Patent Literature

PTL 1: Japanese Unexamined Patent Application Publication No. 2001-289173

### Summary of Invention

### Technical Problem

Such a structure as disclosed in PTL 1 in which the resin member is fixed between the body of the casing and the stator core may cause peeling of the resin member from the inner peripheral surface of the body. If the resin member peels from the body, the resin member cannot exert desired functions and effects.

An object of the present invention is to increase the strength at the joint between the inner peripheral surface of the body and the resin member.

### Solution to Problem

According to a first aspect, there is provided a method for manufacturing a compressor. The manufacturing method includes a first step of forming an oxidized film (70) on an inner peripheral surface of a metal cylindrical body (22) by heating the body (22), and a second step of fitting a stator core (32) to an outer peripheral surface of which a resin member (60) is fixed into the body (22) after the first step and joining the resin member (60) in a molten state to the oxidized film (70).

The first step according to the first aspect is to form the oxidized film (70) on the inner peripheral surface of the metal cylindrical body (22) by heating the body (22). The metal cylindrical body (22) heated in the first step undergoes thermal expansion to have an increased diameter. That is, the step of forming the oxidized film (70) on the inner peripheral surface of the body (22) and the step of increasing the diameter of the body (22) are simultaneously performed in the first step. The second step is to fit the stator core (32) having the resin member (60) fixed to the outer peripheral surface thereof into the body (22). When the oxidized film (70) on the inner peripheral surface of the body (22) comes into contact with the resin member (60), the heat of the body (22) melts the resin member (60). Since the oxidized film (70) has a surface with microsized concavities and convexities, the molten resin member (60) adheres to the surface having the concavities and convexities. Therefore, the area of contact between the oxidized film (70) and the resin member (60) is increased.

When the temperature of the body (22) decreases, the diameter of the body (22) decreases. Consequently, the resin member (60) is tightly fastened between the body (22) and the stator core (32). Such a step facilitates the adhesion of the molten resin member (60) to the concavities and convexities in the oxidized film (70). When the temperature of the body (22) decreases, the molten resin member (60) on the surfaces of the concavities and convexities in the oxidized film (70) is solidified. Consequently, the strength at the joint between the oxidized film (70) and the resin member (60) is increased.

According to a second aspect, the method according to the first aspect further includes a third step of forming the resin member (60) on the outer peripheral surface of the stator core (32) by insert molding.

The third step according to the second aspect is to fix the resin member (60) to the outer peripheral surface of the stator core (32) by insert molding. In the second step, the resin member (60) thus fixed to the outer peripheral surface of the stator core (32) is joined to the oxidized film (70).

According to a third aspect, the body (22) is heated to 250°C or above in the first step according to the second aspect.

In the first step according to the third aspect, the oxidized film (70) is formed on the inner peripheral surface of the body (22) by heating the body (22) to 250°C or above.

According to a fourth aspect, the first step, according to any one of the first to third aspects, of forming the oxidized film (70) on the inner peripheral surface of the body (22) is performed in an ambient atmosphere.

The fourth aspect facilitates the formation of the oxidized film (70) on the inner peripheral surface of the body (22).

According to a fifth aspect, the first step, according to any one of the first to third aspects, of forming the oxidized film (70) on the inner peripheral surface of the body (22) is performed in an atmosphere with an oxygen partial pressure higher than in an ambient atmosphere.

The fifth aspect provides the oxidized film (70) with a relatively large thickness on the inner peripheral surface of the body (22).

According to a sixth aspect, the first step, according to any one of the first to third aspects, of forming the oxidized film (70) on the inner peripheral surface of the body (22) is performed in an atmosphere with an oxygen partial pressure lower than in an ambient atmosphere.

The sixth aspect provides the oxidized film (70) with a relatively small thickness on the inner peripheral surface of the body (22).

According to a seventh aspect, the first step, according to any one of the first to sixth aspects, of forming the oxidized film (70) on the inner peripheral surface of the body (22) is performed by infrared heating, heating in a furnace, or induction heating.

The seventh aspect assuredly provides the oxidized film (70) on the inner peripheral surface of the body (22).

### Brief Description of Drawings

[Fig. 1] Fig. 1 illustrates an overview of a refrigeration apparatus according to an embodiment not belonging to the claimed invention.
[Fig. 2] Fig. 2 is a longitudinal sectional view of a compressor according to the embodiment not belonging to the claimed invention.
[Fig. 3] Fig. 3 is a transverse sectional view of an electric motor.
[Fig. 4] Fig. 4 is an enlargement of part of Fig. 3, illustrating a resin member, included in the electric motor, and peripheral elements.
[Fig. 5] Fig. 5 is a transverse sectional view of a body in a heating step.
[Fig. 6] Fig. 6 is a transverse sectional view of a stator core in an insert molding step.
[Fig. 7] Fig. 7 is a transverse sectional view of the stator core in a joining step.
[Fig. 8] Fig. 8 is a transverse sectional view of an electric motor according to a modification.

### Description of Embodiments

Embodiments will now be described in detail with reference to the drawings. The drawings are for conceptual illustration of the present invention. For ease of understanding, the sizes, ratios, or numbers of relevant elements are occasionally exaggerated or simplified as appropriate.

A compressor (20) according to an embodiment not belonging to the claimed invention is to be provided in a refrigeration apparatus (1).

### (1) Overview of Refrigeration Apparatus

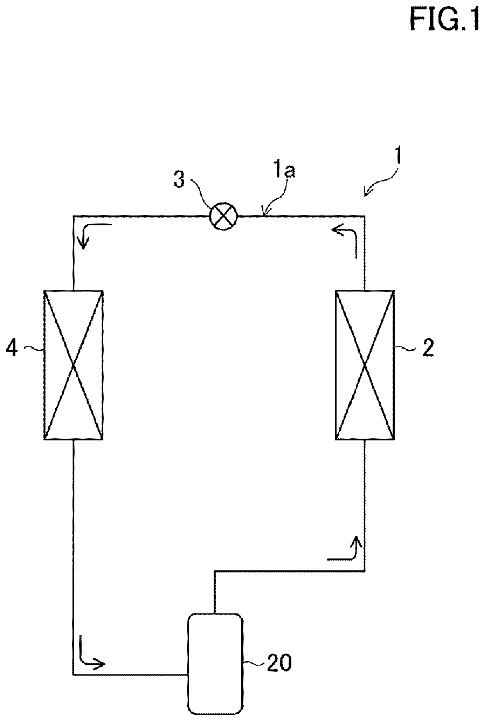

The refrigeration apparatus (1) illustrated in Fig. 1 includes the compressor (20) according to the embodiment not belonging to the claimed invention. The refrigeration apparatus (1) includes a refrigerant circuit (1a) that is filled with refrigerant. The refrigerant circuit (1a) includes the compressor (20), a radiator (2), a decompression mechanism (3), and an evaporator (4). The decompression mechanism (3) is an expansion valve. The refrigerant circuit (1a) is configured to perform a vapor-compression refrigeration cycle.

The refrigeration cycle progresses as follows. The refrigerant is compressed by the compressor (20) and radiates heat to air at the radiator (2). The refrigerant thus radiated heat is then decompressed by the decompression mechanism (3) and evaporates in the evaporator (4). The refrigerant thus evaporated is suctioned into the compressor (20).

The refrigeration apparatus (1) is an air conditioner. The air conditioner may be a cooling-only apparatus, a heating-only apparatus, or an air conditioner switchable between cooling and heating. Such an air conditioner includes a switching mechanism (for example, a four-way switching valve) configured to switch directions of refrigerant circulation. The refrigeration apparatus (1) may alternatively be a water heater, a chiller unit, a cooling apparatus configured to cool air in a closed space, or the like. The cooling apparatus is configured to cool air inside a refrigerator, a freezer, a container, or the like. The expansion mechanism includes an electronic expansion valve, a heat-sensitive expansion valve, an expander, or a capillary tube.

### (2) Compressor

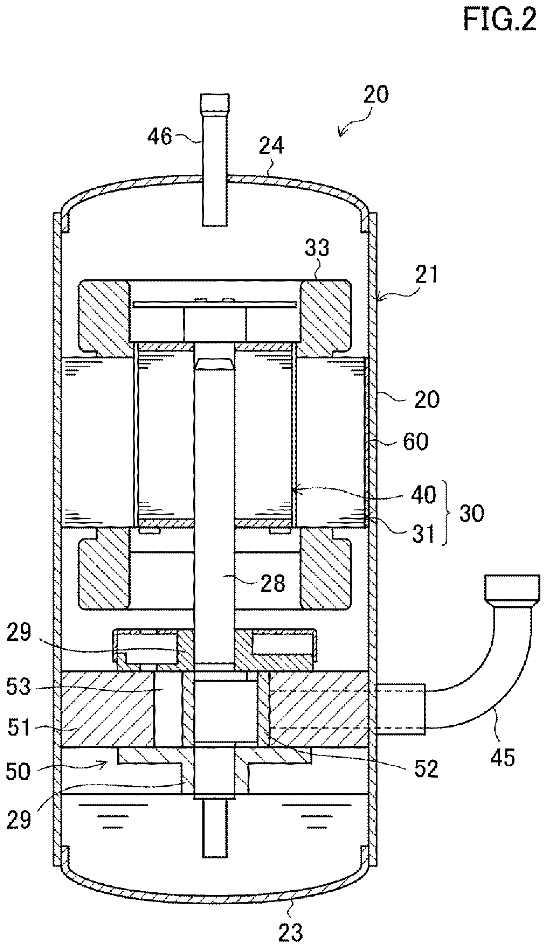

As illustrated in Fig. 2, the compressor (20) is a rotary fluid machine. The compressor (20) includes a casing (21), an electric motor (30), a drive shaft (28), and a compression mechanism (50). The compressor (20), which is a rotary compressor, may alternatively be of any other type such as a scroll type.

### (2-1) Casing

The casing (21) houses the electric motor (30), the drive shaft (28), and the compression mechanism (50). The casing (21) is a hermetic container. The casing (21) is filled with the refrigerant discharged from the compression mechanism (50) and having a high pressure.

The casing (21) is made of iron-based metal material. The casing (21) includes a body (22), a bottom part (23), and a top part (24). The body (22) is a metal cylindrical member. The body (22) has openings at two respective axial ends thereof. In the present example, the axial direction of the body (22) corresponds to the vertical direction. The bottom part (23) closes the lower one of the openings of the body (22). The top part (24) closes the upper one of the openings of the body (22).

### (2-2) Electric Motor

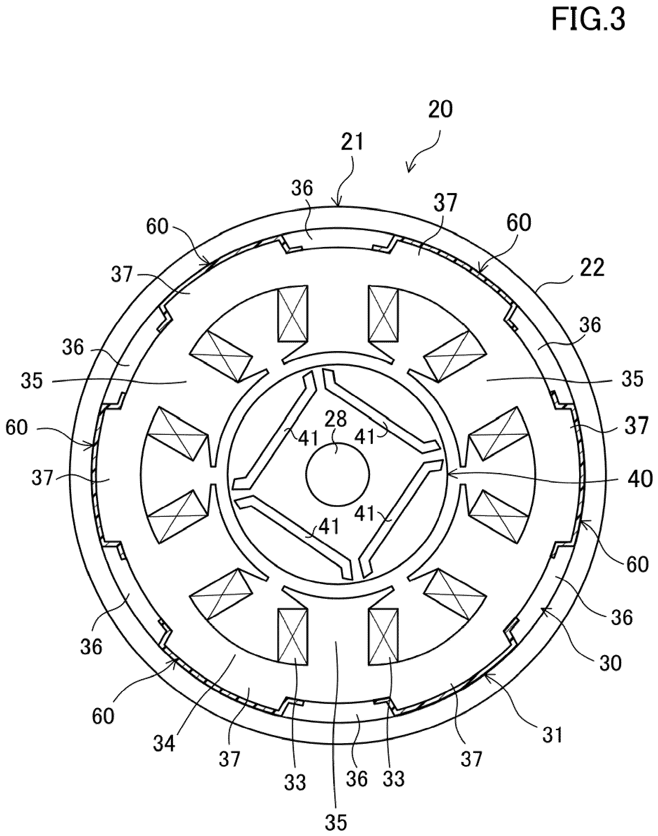

As illustrated in Figs. 2 and 3, the electric motor (30) is located above the compression mechanism (50). The electric motor (30) includes a stator (31) and a rotor (40). The stator (31) is supported by the body (22) of the casing (21). How the stator (31) is fixed will be described in detail separately below.

The stator (31) includes a stator core (32) and coils (33) wound on the stator core (32). The stator core (32) includes electromagnetic steel plates that are stacked in the axial direction. As illustrated in Fig. 3, the stator core (32) includes an annular back yoke (34) and a plurality of (six in the present example) teeth (35) extending radially inward from the inner peripheral surface of the back yoke (34).

The back yoke (34) has in the outer peripheral surface thereof a plurality of (six in the present example) core cuts (36). The core cuts (36) are grooves each extending in the axial direction of the stator core (32). Projections (37) project radially outward between adjacent ones of the core cuts (36). The stator core (32) in the present example has six such projections (37). The projections (37) each have a pair of side faces (37a) each extending radially outward, and one end face (37b) extending between the one side face (37a). The projections (37) each extend from one axial end to the other axial end of the stator core (32).

The rotor (40) is located on the inner side of the stator core (32). The drive shaft (28) is fixed at the center axis of the rotor (40). The rotor (40) has a plurality of (four in the present example) slots (41). Permanent magnets are embedded in the slots (41).

The operating frequency of the electric motor (30) is controlled by an inverter device. In other words, the compressor (20) employs an inverter scheme in which the operating frequency is variable.

### (2-3) Drive Shaft

The drive shaft (28) extends vertically along the center axis of the casing (21). The drive shaft (28) is to be rotated by the electric motor (30). The drive shaft (28) is rotatably supported by a bearing (29).

### (2-4) Compression Mechanism

The compression mechanism (50) includes a cylinder (51) and a piston (52) provided inside the cylinder (51). A cylinder chamber (53) is provided between the inner peripheral surface of the cylinder (51) and the outer peripheral surface of the piston (52). The piston (52) is to be driven by the drive shaft (28) in such a manner as to compress fluid in the cylinder chamber (53).

### (2-5) Suction Pipe and Discharge Pipe

The compressor (20) includes a suction pipe (45) and a discharge pipe (46). The suction pipe (45) extends into the body (22) in the radial direction and communicates with the cylinder chamber (53). The refrigerant, having a low pressure, in the refrigerant circuit (1a) is to be suctioned into the cylinder chamber (53) through the suction pipe (45). The discharge pipe (46) extends through the top part (24) in the axial direction and communicates with the space inside the casing (21). The refrigerant compressed by the compression mechanism (50) flows through the core cuts (36) of the electric motor (30) and so forth and is then delivered to the refrigerant circuit (1a) through the discharge pipe (46).

### (3) Structure of Fixing Stator

A structure of fixing the stator (31) will now be described in detail. The compressor (20) according to the present embodiment includes a resin member (60) provided on the outer peripheral surface of the stator core (32), and an oxidized film (70) provided on the inner peripheral surface of the body (22) of the casing (21).

### (3-1) Resin Member

As illustrated in Figs. 2 to 4, the compressor (20) includes a plurality of resin members (60). The compressor (20) in the present example includes six resin members (60). The resin members (60) are provided at the respective projections (37) of the stator core (32). Therefore, the number of the resin members (60) is equal to the number of the projections (37). For example, the stator core (32) may have eight projections (37) on the outer peripheral surface thereof. In such a case, the compressor (20) has eight resin members (60) provided one to one for the eight projections (37).

The resin member (60) is made of an insulating material. The resin member (60) has a function of suppressing the propagation of electromagnetic noise from the electric motor (30) to the outside of the casing (21). The resin member (60) in the present example is made of thermoplastic resin. The resin member (60) is made of PPS (polyphenylene sulfide), LCP (liquid-crystal polymer), PBT (polybutylene terephthalate), polyimide, PBI (polybenzimidazole), PEEK (polyether ether ketone), PSF (polysulfone), or PPO (polyphenylene oxide). The resin material (60) may alternatively be made of a composite obtained by adding glass fibers to any of the above thermoplastic resins.

The resin member (60) is fixed to the outer peripheral surface of the stator core (32). The resin member (60) extends from one axial end to the other axial end of the stator core (32).

The resin member (60) covers the entire surface of the corresponding projection (37) of the stator core (32). The resin member (60) is a single continuous member including a pair of base parts (61), a pair of sidewalls (62), and one fixed part (63).

The pair of base parts (61) are located on portions of the outer peripheral surface of the back yoke (34) that are on two respective sides of the proximal part of the projection (37). The pair of base parts (61) each extend along the outer peripheral surface of the back yoke (34).

The pair of sidewalls (62) cover the respective side faces (37a) of the projection (37). The pair of sidewalls (62) each extend in the direction in which the projection (37) projects.

The fixed part (63) is continuous with each of the radially outer ends of the pair of sidewalls (62). The fixed part (63) in sectional view taken perpendicularly to the axial direction of the body (22) has an arc shape extending along the inner peripheral surface of the body (22). The fixed part (63) is located between the body (22) and the stator core (32). Exactly, the fixed part (63) is located between the oxidized film (70) and the stator core (32).

The resin member (60) is formed on the outer peripheral surface of the stator core (32) by insert molding, which will be described in detail separately below.

### (3-2) Oxidized Film

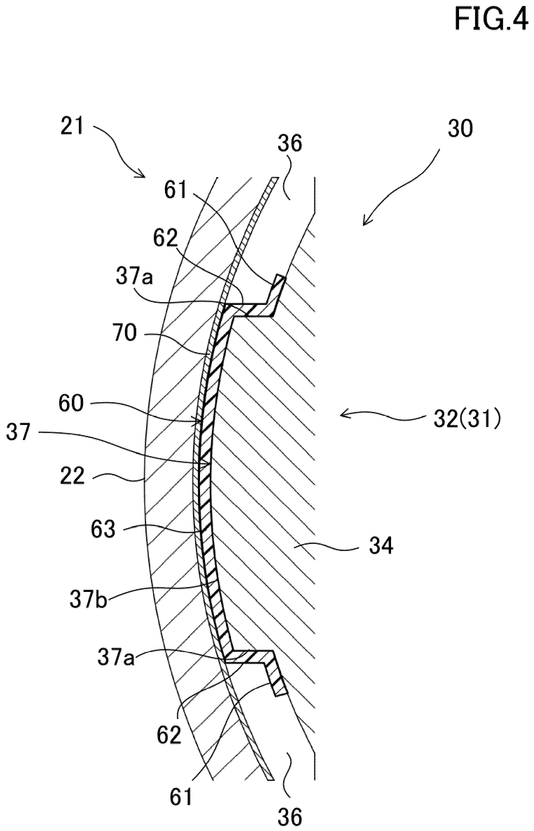

As illustrated in Fig. 4, the oxidized film (70) is provided on the inner peripheral surface of the body (22) of the casing (21). Note that the oxidized film (70) illustrated in Fig. 4 and other drawings has an exaggerated thickness.

The body (22) is made of an iron-based metal material. The oxidized film (70) is obtained by oxidizing the inner peripheral surface of the body (22). The oxidized film (70) in the present example is made of FeO (wustite), Fe₂O₃ (hematite), or Fe₃O₄ (magnetite). In particular, the oxidized film (70) may preferably be made of Fe₃O₄. Fe₃O₄ is dense and hard to deteriorate. The oxidized film (70) may contain iron hydroxide or iron oxyhydroxide.

The oxidized film (70) is present at least at a position corresponding to the fixed part (63) of each resin member (60). The oxidized film (70) faces the resin member (60). The oxidized film (70) extends from one axial end to the other axial end of the stator core (32). The fixed part (63) is joined to the body (22) with the oxidized film (70) in between. The oxidized film (70) in the present example spreads over the entire circumference of the body (22). Therefore, the fixed part (63) and the oxidized film (70) are assuredly made to be in contact with each other. The oxidized film (70) provided on the body (22) may alternatively be present only at each of the positions corresponding to the fixed parts (63).

The oxidized film (70) may preferably have a thickness of 2 µm or smaller. The oxidized film (70) may alternatively have a thickness smaller than 50 nm.

### (4) Method for Manufacturing Compressor

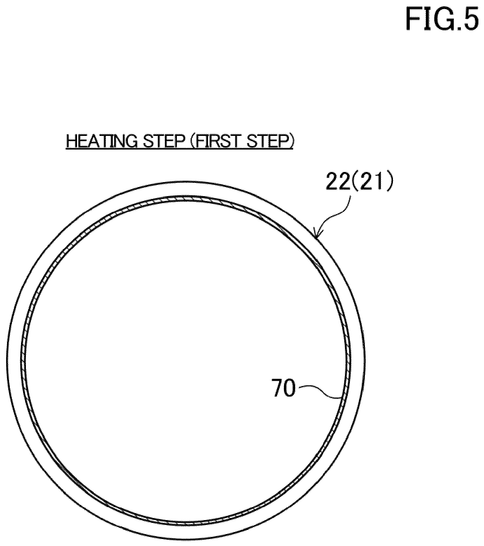

A method for manufacturing the compressor (20) will now be described in detail with reference to Figs. 5 to 7. The method for manufacturing the compressor (20) includes a heating step, an insert molding step, and a joining step. The heating step corresponds to the first step according to the present invention. The insert molding step corresponds to the third step according to the present invention. The joining step corresponds to the second step according to the present invention.

### (4-1) Heating Step

The heating step, illustrated in Fig. 5, is performed on the cylindrical body (22) of the casing (21). The heating step is to form an oxidized film (70) on the inner peripheral surface of the body (22) of the casing (21) by heating the body (22). In the heating step, the body (22) may preferably be heated to 250°C or above. Thus, the oxidized film (70) is assuredly formed on the body (22).

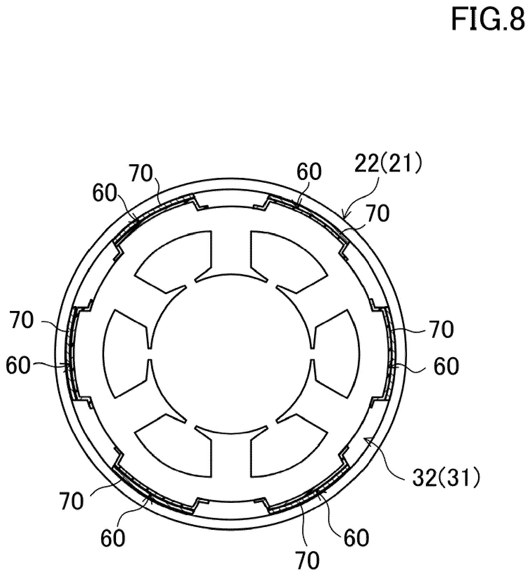

The heating step of forming the oxidized film (70) on the inner peripheral surface of the body (22) may be performed in an atmosphere with an ambient pressure. Such a method facilitates the formation of the oxidized film (70) on the surface of the body (22). The heating step of forming the oxidized film (70) on the body (22) may be performed by induction heating (in the present example, high-frequency heating). Such a method quickly raises the temperature of the body (22) and thus facilitates the formation of the oxidized film (70) on the body (22). As in a modification illustrated in Fig. 8, the oxidized film (70) formed on the inner peripheral surface of the body (22) may be present only at each of the positions corresponding to the fixed parts (63). The oxidized film (70) in the modification illustrated in Fig. 8 is absent at the positions corresponding to the core cuts (36). High-frequency heating is suitable for locally forming the oxidized film (70) on the inner peripheral surface of the body (22).

The body (22) heated in the heating step undergoes thermal expansion to have an increased diameter (inside diameter and outside diameter). Thus, the heating step increases the diameter of the body (20) in preparation for shrink fitting to be described in detail separately below, simultaneously with the formation of the oxidized film (70). Accordingly, the manufacturing time is reduced.

### (4-2) Insert Molding Step

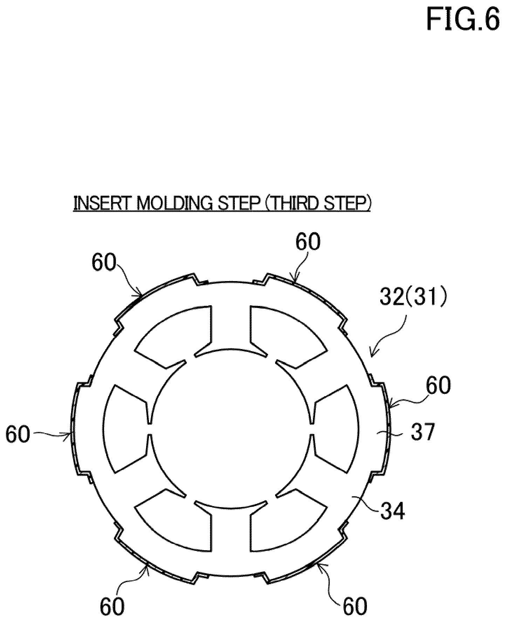

The insert molding step, illustrated in Fig. 6, is to obtain a unit (U) by forming a resin member (60) on the outer peripheral surface of the stator core (32) through insert molding. Insert molding facilitates the formation of the resin member (60) on the outer peripheral surface of the stator core (32). The insert molding step may be performed before the heating step. Alternatively, the insert molding step may be performed between the heating step and the joining step.

### (4-3) Joining Step

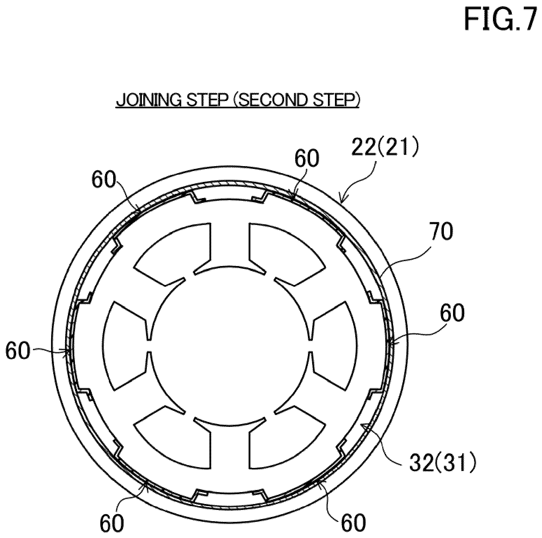

The joining step, illustrated in Fig. 7, is performed by inserting the unit (U) into the body (22). The increase in the diameter of the body (22) in the heating step facilitates the insertion of the unit (U) into the body (22). In the joining step, the unit (U) is fitted into the body (22). In other words, the unit (U) is fixed inside the body (22) by shrink fitting.

When the oxidized film (70) of the body (22) comes into contact with the fixed part (63) of the resin member (60) in the joining step, the heat of the body (22) melts the resin member (60). The oxidized film (70) formed on the inner peripheral surface of the body (22) has a surface with microsized concavities and convexities. Therefore, the molten resin member (60) adheres to the oxidized film (70) in such a manner as to cover the concavities and convexities in the oxidized film (70). Consequently, the area of contact between the oxidized film (70) and the resin member (60) is increased. Furthermore, the resin member (60) flows into the concavities in the oxidized film (70), whereby a so-called anchoring effect is exerted that makes the resin member (60) difficult to come off the concavities.

The joining step causes the temperature of the body (22) to decrease and thus reduces the diameter of the body (22). Consequently, the resin member (60) is tightly fastened between the body (22) and the stator core (32). Such a step facilitates the adhesion of the molten resin member (60) to the concavities and convexities in the oxidized film (70). When the temperature of the body (22) decreases, the molten resin member (60) on the surfaces of the concavities and convexities in the oxidized film (70) is solidified.

The above steps increases the strength at the joint between the oxidized film (70) and the resin member (60) and thus prevents the peeling of the resin member (60) from the body (22). Consequently, the compressor (20) according to the present embodiment is assuredly provided with an effect of electromagnetic-noise reduction that is produced by the resin member (60).

### (5) Features

(5-1)
The compressor (20) includes the oxidized film (70) provided on the inner peripheral surface of the metal cylindrical body (22). The oxidized film (70) and the resin member (60) provided on the outer peripheral surface of the stator core (32) are joined to each other.

The oxidized film (70) has a surface with microsized concavities and convexities. Therefore, the area of contact between the oxidized film (70) and the resin member (60) is increased. Consequently, the strength at the joint between the body (22) and the resin member (60) is increased.

(5-2)
The method for manufacturing the compressor (20) includes the heating step (first step) of forming the oxidized film (70) on the inner peripheral surface of the metal cylindrical body (22) by heating the body (22), and the joining step (second step) of fitting the stator core (32) to the outer peripheral surface of which the resin member (60) is fixed into the body (22) after the heating step and joining the resin member (60) in a molten state to the oxidized film (70).

In the heating step, while the oxidized film (70) is formed on the inner peripheral surface of the body (22) by heating the body (22), the diameter of the body (22) is increased. Hence, the work of forming the oxidized film (70) and the work of increasing the diameter of the body (22) are simultaneously achieved in a single step.

In the joining step, the unit (U) is shrink-fitted into the body (22). Thus, the resin member (60) is firmly joined to the body (22) inside the body (22). Furthermore, since the molten resin member (60) is made to adhere to the concavities and convexities formed in the surface of the oxidized film (70), the area of contact between the resin member (60) and the oxidized film (70) is increased. Furthermore, since the molten resin member (60) is solidified in the concavities formed in the oxidized film (70), a so-called anchoring effect is exerted that makes the resin member (60) difficult to come off the oxidized film (70). The above functional effects increase the strength at the joint between the body (22) and the resin member (60).

Furthermore, when the temperature of the body (22) decreases, the molten resin is solidified and the unit (U) is tightly fastened to the body (22). Thus, the strength at the joint between the oxidized film (70) and the resin member (60) is further increased.

(5-3)
The method for manufacturing the compressor (20) includes the insert molding step (third step) of forming the resin member (60) on the outer peripheral surface of the stator core (32) by insert molding. The insert molding step facilitates the formation of the resin member (60) on the outer peripheral surface of the stator core (32) and increases the joining strength between the stator core (32) and the resin member (60).

(5-4)
In the heating step, the body (22) is heated to 250°C or above. Thus, the oxidized film (70) having concavities and convexities is formed on the inner peripheral surface of the body (22).

### (6) Other Embodiments

The above embodiment may be modified as follows.

The heating step of forming the oxidized film (70) on the inner peripheral surface of the body (22) may be performed in an atmosphere with an oxygen partial pressure higher than in the ambient atmosphere. Specifically, the heating step of forming the oxidized film (70) on the inner peripheral surface of the body (22) may be performed by heating the body (22) in a furnace with a high oxygen partial pressure. Alternatively, the heating step of forming the oxidized film (70) on the inner peripheral surface of the body (22) may be performed by heating the body (22) while blowing oxygen gas to the body (22). As another alternative, the heating step of forming the oxidized film (70) on the inner peripheral surface of the body (22) may be performed by infrared heating.

Forming the oxidized film (70) in an atmosphere with an oxygen partial pressure higher than in the ambient atmosphere increases the thickness of the oxidized film (70).

The heating step of forming the oxidized film (70) on the inner peripheral surface of the body (22) may alternatively be performed in an atmosphere with an oxygen partial pressure lower than in the ambient atmosphere. Thus, the thickness of the oxidized film (70) is reduced to, for example, smaller than 50 nm.

It would be understood that details of the embodiments and modifications described above are changeable in various ways without departing from the scope of the appended claims. The features of the above embodiments, modifications, and other possible embodiments may be combined or exchanged as appropriate, unless the functions within the scope of the present invention are deteriorated.

The terms "first", "second", "third", and so on used in the above description are only for distinguishing relevant elements denoted by such terms and do not limit the numbers or order of such elements.

### Industrial Applicability

As described above, the present invention is useful for compressors.

### Reference Signs List

- 1: refrigeration apparatus
- 20: compressor
- 22: body
- 32: stator core
- 60: resin member
- 70: oxidized film

## Claims

1. A method for manufacturing a compressor, comprising:
a first step of forming an oxidized film (70) on an inner peripheral surface of a metal cylindrical body (22) by heating the body (22); and
a second step of fitting a stator core (32) to an outer peripheral surface of which a resin member (60) is fixed into the body (22) after the first step and joining the resin member (60) in a molten state to the oxidized film (70).

2. The method for manufacturing a compressor according to Claim 1, further comprising: a third step of forming the resin member (60) on the outer peripheral surface of the stator core (32) by insert molding.

3. The method for manufacturing a compressor according to Claim 2,
wherein the body (22) is heated to 250°C or above in the first step.

4. The method for manufacturing a compressor according to any one of Claims 1 to 3, wherein the first step of forming the oxidized film (70) on the inner peripheral surface of the body (22) is performed in an ambient atmosphere.

5. The method for manufacturing a compressor according to any one of Claims 1 to 3,
wherein the first step of forming the oxidized film (70) on the inner peripheral surface of the body (22) is performed in an atmosphere with an oxygen partial pressure higher than in an ambient atmosphere.

6. The method for manufacturing a compressor according to any one of Claims 1 to 3,
wherein the first step of forming the oxidized film (70) on the inner peripheral surface of the body (22) is performed in an atmosphere with an oxygen partial pressure lower than in an ambient atmosphere.

7. The method for manufacturing a compressor according to any one of Claims 1 to 6,
wherein the first step of forming the oxidized film (70) on the inner peripheral surface of the body (22) is performed by infrared heating, heating in a furnace, or induction heating.

## Patentansprüche

1. Verfahren zur Herstellung eines Verdichters, umfassend:
einen ersten Schritt des Bildens eines oxidierten Films (70) auf einer Innenumfangsfläche eines metallischen zylindrischen Körpers (22) durch Erwärmen des Körpers (22); und
einen zweiten Schritt des Anbringens eines Statorkerns (32), an dessen Außenumfangsfläche ein Harzelement (60) in dem Körper (22) befestigt ist, nach dem ersten Schritt und des Verbindens des Harzelements (60) in einem geschmolzenen Zustand mit dem oxidierten Film (70).

2. Verfahren zur Herstellung eines Verdichters nach Anspruch 1, ferner umfassend: einen dritten Schritt des Bildens des Harzelements (60) auf der Außenumfangsfläche des Statorkerns (32) durch Einsatzformen.

3. Verfahren zur Herstellung eines Verdichters nach Anspruch 2,
wobei der Körper (22) in dem ersten Schritt auf 250 °C oder höher erwärmt wird.

4. Verfahren zur Herstellung eines Verdichters nach einem der Ansprüche 1 bis 3, wobei der erste Schritt des Bildens des oxidierten Films (70) auf der Innenumfangsfläche des Körpers (22) in einer Umgebungsatmosphäre durchgeführt wird.

5. Verfahren zur Herstellung eines Verdichters nach einem der Ansprüche 1 bis 3,
wobei der erste Schritt des Bildens des oxidierten Films (70) auf der Innenumfangsfläche des Körpers (22) in einer Atmosphäre mit einem höheren Sauerstoffpartialdruck als in einer Umgebungsatmosphäre durchgeführt wird.

6. Verfahren zur Herstellung eines Verdichters nach einem der Ansprüche 1 bis 3,
wobei der erste Schritt des Bildens des oxidierten Films (70) auf der Innenumfangsfläche des Körpers (22) in einer Atmosphäre mit einem niedrigeren Sauerstoffpartialdruck als in einer Umgebungsatmosphäre durchgeführt wird.

7. Verfahren zur Herstellung eines Verdichters nach einem der Ansprüche 1 bis 6,
wobei der erste Schritt des Bildens des oxidierten Films (70) auf der Innenumfangsfläche des Körpers (22) durch Infraroterwärmung, Erwärmung in einem Ofen oder Induktionserwärmung durchgeführt wird.

## Revendications

1. Procédé de fabrication d'un compresseur, comprenant :
une première étape cde formation d'un film oxydé (70) sur une surface périphérique intérieure d'un corps cylindrique métallique (22) par le chauffage du corps (22) ; et
une deuxième étape d'installation d'un noyau de stator (32) sur une surface périphérique extérieure dont un élément en résine (60) est fixé dans le corps (22) après la première étape, et de jonction de l'élément en résine (60) à l'état fondu au film oxydé (70).

2. Procédé de fabrication d'un compresseur selon la revendication 1, comprenant en outre : une troisième étape consistant à former l'élément en résine (60) sur la surface périphérique extérieure du noyau du stator (32) par moulage par insertion.

3. Procédé de fabrication d'un compresseur selon la revendication 2,
le corps (22) étant chauffé à 250°C ou davantage à la première étape.

4. Procédé de fabrication d'un compresseur selon une quelconque des revendications 1 à 3, la première étape de formation du film oxydé (70) sur la surface périphérique intérieure du corps (22) étant effectuée dans une atmosphère ambiante.

5. Procédé de fabrication d'un compresseur selon une quelconque des revendications 1 à 3,
la première étape de formation du film oxydé (70) sur la surface périphérique intérieure du corps (22) étant effectuée dans une atmosphère avec une pression partielle d'oxygène supérieure à celle d'une atmosphère ambiante.

6. Procédé de fabrication d'un compresseur selon une quelconque des revendications 1 à 3,
la première étape de formation du film oxydé (70) sur la surface périphérique intérieure du corps (22) étant effectuée dans une atmosphère avec une pression partielle d'oxygène inférieure à celle d'une atmosphère ambiante.

7. Procédé de fabrication d'un compresseur selon une quelconque des revendications 1 à 6,
la première étape de formation du film oxydé (70) sur la surface périphérique intérieure du corps (22) étant effectuée par chauffage infrarouge, par chauffage au four, ou par chauffage par induction.
